# EUROPÄISCHE PATENTSCHRIFT

(11) **EP 1 463 927 B1**
(45) Veröffentlichungstag und Bekanntmachung des Hinweises auf die Patenterteilung: **02.04.2008**
(21) Anmeldenummer: 02806028.3
(22) Anmeldetag: 28.12.2002
(51) Int. Cl.: G01L 9/00, G01L 19/04, G01L 19/06, G01L 13/02

(54) **RELATIVDRUCKSENSOR**
RELATIVE PRESSURE SENSOR
CAPTEUR DE PRESSION RELATIVE

(30) Priorität: 10.01.2002 DE 10200780
(43) Veröffentlichungstag der Anmeldung: 06.10.2004
(73) Patentinhaber: Endress + Hauser GmbH + Co. KG, 79689 Maulburg (DE)
(72) Erfinder: FLÖGEL, Karl, 79650 Schopfheim (DE); LOPATIN, Sergej, 79540 Lörrach (DE); SCHMIDT, Elke, 79650 Schopfheim (DE); UEHLIN, Thomas, 79650 Schopfheim (DE); TEXTOR, Olaf, 79540 Lörrach (DE); HÜGEL, Michael, 79541 Lörrach (DE)
(74) Vertreter: Andres, Angelika Maria
(86) Internationale Anmeldenummer: PCT/EP2002/014787
(87) Internationale Veröffentlichungsnummer: WO 2003/058186

(56) Entgegenhaltungen:
- EP-A- 0 974 825
- EP-A- 1 070 948
- WO-A-02/090916

## Beschreibung

Die vorliegende Erfindung betrifft einen Relativdrucksensor. Relativdrucksensoren messen gewöhnlich die Differenz zwischen dem Druck in einem Meßmedium und dem aktuellen Atmosphärendruck. Ein Relativdrucksensor umfaßt im allgemeinen einen Grundkörper, an dem eine Meßmembran mit ihrem Rand druckdicht befestigt ist, wobei zwischen der Meßmembran und dem Grundkörper eine Druckkammer ausgebildet ist. Zur Relativdruckmessung wird die Referenzluft über eine grundkörperseitige Öffnung in die Druckkammer geleitet, und die der Meßkammer abgewandte Oberfläche der Meßmembran wird mit dem Meßdruck beaufschlagt. Die resultierende Verformung der Meßmembran ist ein Maß für den Relativdruck, welches in geeigneter Weise in ein Meßsignal gewandelt wird.

Die erwähnte Zufuhr der Referenzluft bedingt, daß Feuchte in die Druckkammer gelangt, die bei Unterschreitung des Taupunktes im Inneren des Sensors kondensieren und die Funktion des Sensors beeinträchtigen kann. Dies ist insbesondere dann der Fall, wenn die Umgebungsluft des Sensors eine höhere Temperatur aufweist als das Medium, dessen Druck zu messen ist.

Hegner et al. offenbaren in der europäischen Patentanmeldung EP 0 974 825 A3 einen Relativdrucksensor, der einen Referenzluftpfad mit einem Feuchtefilter aufweist, wobei der Feuchtefilter im Frontbereich des Relativdrucksensors nahe der Meßmembran bzw. nahe dem Medium angeordnet ist, so daß die Temperatur des Feuchtefilters ähnlich der Medientemperatur ist. Diese Anordnung gewährleistet, daß die Feuchtigkeit in der Referenzluft ggf. schon vor dem Eintritt in den Referenzluftpfad auskondensiert, so daß es in der Druckkammer kaum zu Taupunktunterschreitungen kommen kann. Die beschriebene Anordnung ist jedoch vergleichsweise aufwendig.

Andere Relativdrucksensoren weisen ein Kapillarröhrchen auf, welches mit der grundkörperseitigen Öffnung der Druckkammer kommuniziert. Das Kapillarröhrchen dient als Referenzluftpfad, welcher der eindringenden Feuchtigkeit einen gewissen Diffusionswiderstand entgegensetzt. Das Kapillarröhrchen ist häufig ein Metallröhrchen, welches beispielsweise durch Einglasen am Grundkörper befestigt ist. Diese Art der Montage geht ebenfalls mit einem erhöhten Fertigungsaufwand einher. Zudem ist die Eintrittsöffnung des Kapillarröhrchens thermisch weitgehend von der Druckmeßzelle entkoppelt, so daß bei höheren Temperaturen an der Eintrittsöffnung Luft mit einem hohen Wassergehalt in das Kapillarröhrchen gelangen kann, was zur Taupunktunterschreitung in der kälteren Druckkammer führt. Die Kondensation in der Meßzelle wird durch die beschriebene Anordnung im wesentlichen verzögert und ggf. vermindert, ganz kann sie damit jedoch nicht vermieden werden.

*Die nachveröffentlichte* WO 02/090916A1 *offenbart einen Relativdrucksensor mit einem hydrophoben nanoporigen Filter. Solche Filter sind jedoch sehr teuer.*

Es ist daher die Aufgabe der vorliegenden Erfindung, einen Relativdrucksensor mit einer einfachen und kompakten Konstruktion bereitzustellen, der das Eindringen von Feuchtigkeit effektiver verzögert bzw. vermindert oder vermeidet. Die Aufgabe wird gelöst durch den Relativdrucksensor gemäß des unabhängigen Anspruchs 1.

Der erfindungsgemäße Relativdrucksensor zur Messung der Druckdifferenz zwischen einem Meßdruck und dem Atmosphärendruck in der Umgebung des Drucksensors, umfaßt einen Grundkörper und eine mit einem Meßdruck beaufschlagbare Meßmembran die mit ihrem Rand an dem Grundkörper befestigt ist, wobei zwischen dem Grundkörper und der Meßmembran eine Druckkammer ausgebildet ist, die über einen Referenzluftpfad mit der Atmosphäre kommuniziert, wobei der Referenzluftpfad einen gewundenen Pfad umfasst, *welcher in einem Bauteil des Relativdrucksensors angeordnet ist, wobei das Bauteil der Grundkörper oder ein weiteres Bauteil ist, welches an dem Grundkörper befestigt ist, wobei die Länge des gewundenen Pfades mindestens 75% der Länge des Umfangs der Meßmembran beträgt.*

Der gewundene Referenzluftpfad dient als Diffusionsbarriere und verzögert auf diese Weise das Eindringen von Feuchtigkeit in das Sertsorinnere, insbesondere in die Druckkammer. Insofern als der Pfad gewunden ist, kann innerhalb der kompakten Abmessungen des Drucksensors ein Pfad untergebracht werden, der hinreichend lang ist, um zufriedenstellende Ergebnisse zu erzielen. Die Länge des gewundenen Pfades beträgt bevorzugt mindestens 100% und besonders bevorzugt mindestens 150% der Länge des Umfangs der Meßmembran. Bezogen auf die axiale Dimension eines im wesentlichen zylindrischen Relativdrucksensors ist der gewundene Pfad bevorzugt mindestens doppelt so lang ist, wie der Abstand der atmosphärenseitigen Öffnung des gewundenen Pfades von der Ebene der Meßmembran.

Zudem bietet die aufgrund der gewundenen Form kompakte Anordnung des Pfades die Möglichkeit, einen guten thermischen Kontakt zwischen der atmosphärenseitigen Öffnung des Referenzluftpfades und der Druckkammer zu gewährleisten.

Dies ist insofern vorteilhaft, als dadurch die Temperatur der atmosphärenseitigen Öffnung des Referenzluftpfades nicht zu stark von der Temperatur der Druckkammer abweichen kann. Vorzugsweise ist ein Filter an der atmosphärenseitigen Öffnung des Referenzluftpfades vorgesehen, der gewährleistet, daß kein Kondensat in die Zelle eindringen kann. Auf diese Weise ist es praktisch ausgeschlossen, daß es unter Gleichgewichtsbedingungen zu Taupunktunterschreitungen in der Druckkammer kommt.

Hierbei ist es vorteilhaft, wenn die Komponenten des Relativdrucksensors zwischen der Druckkammer und dem gewundenen Pfad ein Material mit einer guten thermischen Leitfähigkeit aufweisen. Besonders geeignet sind hier Keramiken, insbesondere Aluminiumoxid-Keramiken, sowie bestimmte metallische Legierungen. Es ist ebenso vorteilhaft, wenn die Fügestellen zwischen verschiedenen Baugruppen des Relativdrucksensoren, einen gute Wärmeleitung aufweisen. Das Filterelement ist bevorzugt ebenfalls aus einem metallischen oder einem keramischen Material mit guter Wärmeleitfähigkeit gefertigt, so daß sich das Filterelement vollständig auf einer hinreichend homogenen und tiefen Temperatur befindet. Vorzugsweise sollte das Filterelement hydrophob bzw. hydrophobiert sein.

Zur Gewährleistung einer guten Wärmeleitung zwischen der Druckkammer und dem gewundenen Pfad sollte eine hinreichend massive Verbindung aus wärmeleitendem Material zwischen der Druckkammer und dem Pfad gegeben sein. Vorzugsweise weisen zu diesem Zweck beliebige parallel zur Trennmembran verlaufende Querschnitte zwischen einem beliebigen Punkt des gewundenen Pfades und der grundkörperseitigen Wand der Druckkammer eine Flächenanteil von wärmeleitendem Material auf, der mindestens 25%, bevorzugt mindestens 40% und besonders bevorzugt mindestens 50% der Membranfläche beträgt.

Zur Gewährleistung eines guten thermischen Kontaktes zwischen der atmosphärenseitigen Öffnung des Referenzluftpfades bzw. des gewundenen Pfades einerseits und der Druckkammer andererseits ist ein möglichst geringer Abstand zwischen diesen Elementen vorzusehen. Der Abstand der Ebene des gewundenen Pfades von der Ebene der Meßmembran ist vorzugsweise geringer ist als die Länge des gewundenen Pfades, besonders bevorzugt geringer als 75% der Länge des gewundenen Pfades und ganz besonders bevorzugt weniger als 50% der Länge des gewundenen Pfades.

Für den erfindungsgemäßen Relativdrucksensor ergeben sich unter anderem die folgenden Varianten zur Gestaltung des gewundenen Pfades. Der gewundene Pfad kann im wesentlichen in einer Ebene verlaufen, wobei eine Spiralform bevorzugt ist. Die Ebene des gewundenen Pfades verläuft dabei bevorzugt parallel zur Ebene der Meßmembran.

Es sind aber auch gewundene Pfade mit bespielsweise einem helikalen Verlauf denkbar, wobei die Länge der Projektion des gewundenen Pfades auf die Ebene der Meßmembran mindestens 50%, bevorzugt mindestens 65%, und besonders bevorzugt mindestens 80% der Gesamtlänge des gewundenen Pfades beträgt.

Der gewundene Pfad kann eine linienförmige Vertiefung (20) in einer Oberfläche eines Bauteils (2) des Relativdrucksensors umfassen, wobei diese Vertiefung mit einem geeigneten weiteren Bauteil abgedeckt ist.

In einer anderen Ausgestaltung kann der gewundene Pfad einen gewundenen Kanal umfassen der sich in mindestens einem Bauteil des Relativdrucksensors zwischen zwei Öffnungen in Oberflächenabschnitten des Bauteils erstreckt. Dies kann beispielsweise dadurch erzielt werden, daß beim Formen des Grünlings eines keramischen Bauteils ein Faden aus einem organischen Material eingebettet wird, um die Form des gewundenen Pfades vorzugeben. Dieser Faden verbrennt beim Brennen des Grünlings, so daß ein kapillarförmiger gewundener Pfad anstelle des Fadens zurückbleibt. Der gewundene Pfad kann beispielsweise - unabhängig von der Art seiner Herstellung - eine Querschnittsfläche von weniger als 2 mm² bevorzugt weniger als 1 mm² und besonders bevorzugt von 0,7 bis 0,4 mm² aufweisen.

Der gewundene Pfad kann prinzipiell in den verschiedensten Bauteilen eines Relativdrucksensors angeordnet sein. Als Bauteil kommt u.a. der Grundkörper in Frage, oder beispielsweise ein weiteres Bauteil, welches an dem Grundkörper befestigt wird. Dieses weitere Bauteil kann beispielsweise ein Deckel oder ein Topf sein, der auf dem Grundkörper unter Ausbildung einer vorzugsweise hermetisch dichten Kammer aufgesetzt wird. Eine solche Kammer kann insbesondere zur Aufnahme der Sensorelektronik geeignet sein.

Vorzugsweise sind die Wände der hermetisch dichten Kammer dem Topf mit einem elektrisch leitfähigen Material beschichtet, so daß die Wände der Kammer Teil eines Faradayschen Käfigs sind, welcher die Sensorelektronik und gegebenenfalls weitere Komponenten des Relativdrucksensors umschließt.

Zur Vervollständigung des Faradayschen Käfigs sind beispielsweise die Mantelflächen des zylindrischen Grundkörpers des Relativdrucksensors sowie die der Messmembran abgewandte Rückseite des Grundkörpers ebenfalls eine leitfähige Schicht aufweisen. Prozessseitig kann der Faradaysche Käfig durch die an der dem Prozess abgewandten Innenseite der Messmembran angebrachte Elektrode vervollständigt werden. Zwischen den einzelnen Komponenten des Faradayschen Käfigs ist selbstverständlich eine hinreichend gute elektrische Verbindung zu gewährleisten.

Die leitfähigen Schichten and der Mantelfläche des Grundkörpers, auf dessen Rückseite, auf den Wänden der hermetisch dichten Kammer sowie auf der Basisfläche des Topfes, die auf der Rückseite des Grundkörpers aufsetzt, können beispielsweise eine aufgedampfte oder aufgesputterte Metallschicht, eine leitfähige Folie oder einen leitfähigen Sprühlack aufweisen.

Derzeit sind aufgesputterte Metallschichten bevorzugt, wobei Cu-haltige, insbesondere Cu-Ni-haltige Schichten besonders bevorzugt sind. Ganz besonders bevorzugt sind aufgesputterte Schichten die mittels eines Targets gesputtert wurden, welches eine Cu-Ni-Legierung aufweist. Bei einer Legierung mit einem größeren Kupferanteil als dem Nickelanteil wird die Korrosionsbeständigkeit mit steigendem Ni-Anteil erhöht. Allerdings, erfordert ein erhöhter Nickelanteil ggf. eine erhöhte Löttemperatur. Zudem erweisen sich Schichten mit einem Ni-Anteil der den Cu-Anteil deutlich übersteigt, als instabil. Derzeit sind Cu-Ni-Legierungen bevorzugt, mit einem Ni-Anteil von mindestens 35% bevorzugt mindesten 40% und besonders bevorzugt zwischen 42,5 und 47,5% aufweist.

Die Schichtdicke der metallschicht ist unkritisch, wobei derzeit eine Schichtdicke zwischen 0.1 µm und 2 µm bevorzugt wird. Besonders bevorzugt ist eine Schichtdicke zwischen etwa 0,5µm und 1 µm, insbesondere etwa 0,7 µm.

Optional kann Cr als Haftvermittler zwischen der Keramik und der leitfähigen Schicht eingesetzt werden.

Die leitfähige Schicht auf der dem Prozess abgewandten Rückseite des Grundkörpers kann entweder vollflächig ausgebildet oder auf einen Bereich beschränkt sein, der außerhalb der Grundfläche der hermetisch dichten Kammer liegt.

Gleichermaßen kann die dem Grundkörper zugewandte Basisfläche des Topfes ebenfalls zumindest abschnittsweise mit dem leitfähigen Material beschichtet sein, um eine leitfähige Verbindung zwischen Grundkörper und dem Topf herzustellen.

Die mechanische Verbindung zwischen dem Topf und dem Grundkörper des Relativdrucksensors kann beispielsweise durch ein Lot, einen leitfähigen Kleber oder die leitfähige Beschichtung selbst hergestellt werden. Insbesondere ein thixotroper Epoxi-Kleber beispielsweise mit dem Namen HYSOL 9093 ist geeignet, da bei Verwendung dieses Materials die Rauhigkeit der Leitfähigen Schichten auf dem Keramiksubstrat ausreicht, um eine elektrische Verbindung durch die Verklebung hindurch zu gewährleisten.

Wie dem Fachmann unmittelbar einleuchtet, ist der soeben beschriebene Aspekt der Erfindung, nämlich die Ausgestaltung der hermetisch dichten Kammer jetzt Bestandteil eines Faradayschen Käfigs, nicht auf Relativdrucksensoren beschränkt, da ein Klimaschutz und EMV-Schutz, wie er in einer solchen Kammer gewährleistet ist, grundsätzlich für alle Arten von Drucksensoren von Interesse ist.

Demzufolge trifft die Erfindung auch Absolutdrucksensoren und Relativdrucksensoren, die nicht in einem entsprechend feuchten Millieu eingesetzt werden. Soweit kann der Topf auch ohne den zuvor beschriebenen Referenzluftpfad gestaltet werden und falls eine Referenzluftführung erforderlich ist, kann diese für weniger feuchtkritische Anwendungen beispielsweise durch ein Kapilarröhrchen erfolgen, welches in axialer Richtung durch den Topf geführt wird, wobei das Röhrchen nicht mit dem Volumen der hermetisch dichten Kammer kommuniziert.

Weitere Aspekte der Erfindung ergeben sich aus den abhängigen Ansprüchen, der nachfolgenden Beschreibung eines Ausführungsbeispiels, und der Zeichnung.

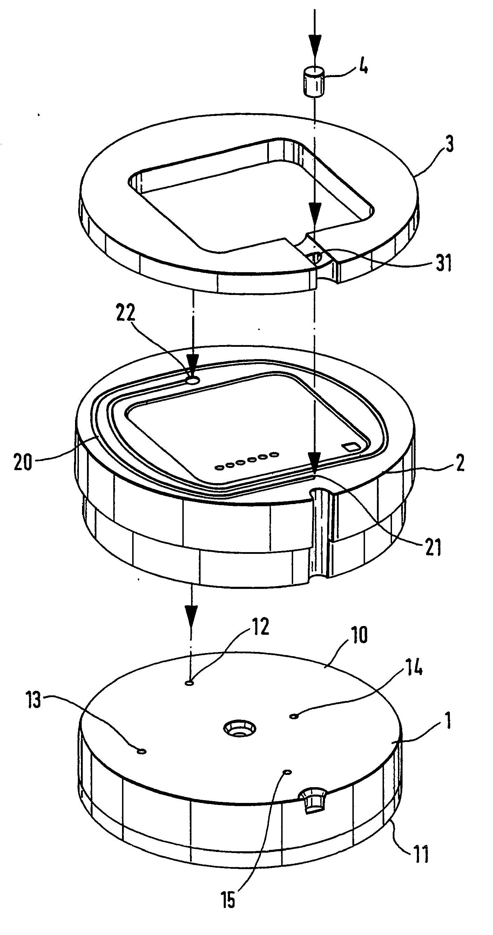

Es zeigt
Fig. 1. eine Explosionszeichnung eines erfindungsgemäßen Relativdrucksensors.

Der in Fig. 1 dargestellte Relativdrucksensor umfaßt eine Meßzelle 1, bestehend aus einem Grundkörper 10 und einer Meßmembran 11, die unter Ausbildung einer Druckkammer an dem Grundkörper befestigt ist. Die Meßmembran 11 ist im Meßbetrieb auf ihrer dem Grundkörper 10 abgewandten Seite mit einem Meßdruck beaufschlagbar. Über eine Druckkammeröffnung 12 kommuniziert die Druckkammer mit dem Atmosphärendruck. Die Verformung der Meßmembran ergibt sich aus der Differenz zwischen dem Atmosphärendruck und dem Meßdruck. Die Verformung kann nach den gängigen Meßprinzipien, beispielsweise kapazitiv, resistiv, oder nach Resonanzverfahren erfaßt werden. Entsprechende elektrische Größen werden über die Grundkörperdurchführungen 13, 14, 15 aus dem Grundkörper geführt und von einer hier nicht gezeigten Schaltung verarbeitet. Die Schaltung wird auf dem Grundkörper 10 angeordnet und mit dem Topf 2 abgedeckt, der beispielsweise mit einem gut wärmeleitenden Kleber auf dem Grundkörper 10 befestigt ist, so daß die Schaltung hermetisch dicht eingeschlossen und vor Feuchtigkeit geschützt ist. Die von der Schaltung erzeugten elektrischen Signale werden über Durchführungen 23 in der dem Grundkörper abgewandten Stirnfläche des Topfes 2 nach außen geführt. Die Stirnfläche des Topfes 2 weist eine spiralförmige Vertiefung 20 auf, die einen gewunden Referenzluftpfad bildet. Die Vertiefung kann beispielsweise einen v-förmigen oder halbkreisförmigen Querschnitt aufweisen. Der Querschnitt der Vertiefung 20 senkrecht zu ihrem Verlauf beträgt etwa 0,5 mm². Ein erstes Ende der Vertiefung 20 fluchtet in axialer Richtung mit der Druckkammeröffnung 12. Eine Bohrung 22 durch den Topf 2 dient als Abschnitt des Referenzluftpfades zwischen der Vertiefung 20 und der Druckkammer. Der Topf 2 ist, ebenso wie der Grundkörper 10 und die Trennmembran 11, ein Bauteil aus Korundkeramik. Die Vertiefung 20 wird hergestellt, indem dem Grünling des Topfes 2 eine entsprechendes Profil aufgeprägt wird.

Zur Gewährleistung eines guten thermischen Kontaktes zwischen der Druckkammer und dem Referenzluftpfad, ist der Topf 2 bis auf die Aussparung für die elektronische Schaltung und die Durchführungen massiv gearbeitet. Der Flächenanteil des massiven Materials in einem beliebigen Querschnitt durch den Topf parallel zur Meßmembran beträgt hier mindestens 50% der Trennmembranfläche.

Zur Fertigstellung des Referenzluftpfades ist die Vertiefung mit einer Abdeckung 3 abgedeckt, wobei die Abdeckung 3 mit einer gut wärmeleitenden Verbindung, beispielsweise einem Kleber an dem Topf 2 befestigt ist. Fluchtend mit dem zweiten Ende 21 der Vertiefung 20 weist die Abdeckung 3 eine Bohrung in axialer Richtung auf, welche die atmosphärenseitige Öffnung 31 des Referenzluftpfades bildet.

In der Öffnung 31 ist ein Filterelement 4 angeordnet, welches bei der derzeit bevorzugten Ausführungsform ein hydrophobiertes poröses keramisches Filterelement ist. Gleichermaßen geeignet sind metallische Filterelemente bzw. organische Filterelemente, beispielsweise solche aus PTFE, wobei die Filterelemente bevorzugt hydrophob oder hydrophobiert sind. Im Sinne eines guten Wärmekontaktes ist das Filterelement mit einem gut wärmeleitenden Kleber in der Eintrittsöffnung 31 befestigt.

Anstelle der Klebeverbindungen sind grundsätzlich alle andere Verbindungstypen geeignet, die eine gute Wärmeleitung ermöglichen.

Da die elektronische Schaltung in geringem Umfang Abwärme generiert, sollte ihr thermischer Kontakt zum Referenzluftpfad, insbesondere zur Eintrittsöffnung 31 des Referenzluftpfades, minimiert werden. Zu diesem Zweck ist der Kernbereich der Abdeckung 3, der mit der Schaltung axial fluchtet, ausgespart. Gleichermaßen ist der zentrale Bereich der Stirnfläche des Topfes 2 dünn ausgeführt, um radiale Wärmeleitung zu minimieren.

## Patentansprüche

1. Relativdrucksensor zur Messung der Druckdifferenz zwischen einem Messdruck und dem Atmosphärendruck in der Umgebung des Drucksensors, umfassend
einen Grundkörper (10) und eine mit einem Messdruck beaufschlagbare Messmembran (11), die mit ihrem Rand an dem Grundkörper befestigt ist, wobei zwischen dem Grundkörper und der Messmembran eine Druckkammer ausgebildet ist, die über einen Referenzluftpfad mit der Atmosphäre kommuniziert,
wobei
der Referenzluftpfad einen gewundenen Pfad (20) umfasst, welcher in einem Bauteil des Relativdrucksensors angeordnet ist, wobei das Bauteil der Grundkörper oder ein weiteres Bauteil ist, welches an dem Grundkörper befestigt ist, **dadurch gekennzeichnet, dass** die Länge des gewundenen Pfades (20) mindestens 75% der Länge des Umfangs der Messmembran (11) beträgt.

2. Relativdrucksensor nach Anspruch 1, wobei der gewundene Pfad einen gewunden Kanal umfasst, der sich in dem Bauteil zwischen zwei Öffnungen in Oberflächenabschnitten des Bauteils erstreckt.

3. Relativdrucksensor nach Anspruch 1, wobei der gewundene Pfad eine linienförmige Vertiefung (20) in einer Oberfläche des Bauteils (2) umfasst, und diese Vertiefung mit einem weiteren Bauteil (3) abgedeckt ist.

4. Relativdrucksensor nach Anspruch 1, wobei der gewundene Pfad (20) im wesentlichen in einer Ebene verläuft.

5. Relativdrucksensor nach Anspruch 4, wobei die Ebene parallel zur Ebene der Messmembran (11) verläuft.

6. Relativdrucksensor nach einem der Ansprüche 1 bis 5, wobei die Länge der Projektion des gewundenen Pfades (20) auf die Ebene der Messmembran (11) mindestens 50%, bevorzugt mindestens 65%, und besonders bevorzugt mindestens 80% der Gesamtlänge des gewundenen Pfades (20) beträgt.

7. Relativdrucksensor nach einem der Ansprüche 1 bis 6, wobei die Länge des gewundenen Pfades (20) mindestens 100%, und bevorzugt mindestens 150% der Länge des Umfangs der Messmembran (11) beträgt.

8. Relativdrucksensor nach einem der bisherigen Ansprüche, wobei die Länge das gewundenen Pfades mindestens doppelt so lang ist wie der Abstand der atmosphärenseitigen Öffnung (31) des gewundenen Pfades von der Ebene der Messmembran (11).

9. Relativdrucksensor nach einem der vorhergehenden Ansprüche, wobei der gewundene Pfad eine Querschnittsfläche von weniger als 2 mm², bevorzugt weniger als 1 mm² und besonders bevorzugt von 0,7 bis 0,4mm², aufweist.

10. Relativdrucksensor nach einem der vorhergehenden Ansprüche, wobei der Abstand der Ebene des gewundenen Pfades von der Ebene der Messmembran geringer ist als die Länge des gewundenen Pfades, bevorzugt geringer als 75% der Länge des gewundenen Pfades und besonders bevorzugt weniger als 50% der Länge des gewundenen Pfades beträgt.

11. Relativdrucksensor nach einem der vorhergehenden Ansprüche, wobei der gewundene Pfad mit der grundkörperseitigen Wand der Druckkammer in der Weise im thermischen Kontakt steht, dass beliebige parallel zur Trennmembran verlaufende Querschnitte zwischen einem beliebigen Punkt des gewundenen Pfades und der grundkörperseitigen Wand der Druckkammer eine Flächenanteil von wärmeleitendem Material aufweisen, der mindestens 10%, bevorzugt mindestens 25% und besonders bevorzugt mindestens 50% der Membranfläche beträgt.

12. Relativdrucksensor nach einem der vorhergehenden Ansprüche, wobei der Referenzluftpfad an seiner atmosphärenseitigen Eintrittsöffnung (31) ein Filterelement (4) aufweist, um das Eindringen von Kondensat in den Referenzluftpfad zu verhindern.

13. Reiativdrucksensor nach Anspruch 12, wobei das Filterelement (4) im thermischen Kontakt mit dem gewundenen Pfad (20) steht.

14. Relativdrucksensor nach Anspruch 12, wobei das Filterelement (4) hydrophob bzw. hydrophobiert ist.

15. Relativdrucksensor nach einem der Ansprüche 12 bis 14, wobei das Filterelement (4) ein keramisches, metallische oder organisches Material aufweist.

16. Relativdrucksensor nach einem der vorhergehenden Ansprüche, wobei das Bauteil (2), in dem der gewundenen Pfad (4) angeordnet ist, an dem Grundkörper (10) unter Ausbildung einer Kammer befestigt ist.

17. Relativdrucksensor nach Anspruch 16, wobei die Kammer hermetisch gegenüber ihrer Umgebung abgedichtet ist, und wobei ferner in der Kammer mindestens ein elektronisches Bauelement angeordnet ist.

18. Relativdrucksensor nach einem der bisherigen Ansprüche, wobei der gewundene Pfad spiralförmig oder helikal verläuft.

## Claims

1. A relative pressure sensor for measuring the pressure difference between a measured pressure and the atmospheric pressure in the area surrounding the pressure sensor, comprising:
a basic body (10) and a measurement membrane (11) which can be acted upon by a measurement pressure, which membrane is fastened by its edge to the basic body, a pressure chamber being formed between the basic body and the measurement membrane which communicates with the atmosphere via a reference air path,
the reference air path comprising a winding path (20) which is located in a component of the relative pressure sensor, the component being the basic body or a further component which is fastened to the basic body, **characterised in that** the length of the winding path (20) is at least 75% of the length of the periphery of the measurement membrane (11).

2. A relative pressure sensor according to Claim 1, wherein the winding path comprises a winding channel which extends within the component between two openings in surface sections of the component.

3. A relative pressure sensor according to Claim 1, wherein the winding path comprises a linear recess (20) in one surface of the component (2), and this recess is covered with a further component (3).

4. A relative pressure sensor according to Claim 1, wherein the winding path (20) extends substantially in one plane.

5. A relative pressure sensor according to Claim 4, wherein the plane extends parallel to the plane of the measurement membrane (11).

6. A relative pressure sensor according to one of Claims 1 to 5, wherein the length of the projection of the winding path (20) on to the plane of the measurement membrane (11) is at least 50%, preferably at least 65%, and particularly preferably at least 80% of the total length of the winding path (20).

7. A relative pressure sensor according to one of Claims 1 to 6, wherein the length of the winding path (20) is at least 100%, and preferably at least 150%, of the length of the periphery of the measurement membrane (11).

8. A relative pressure sensor according to one of the preceding claims, wherein the length of the winding path is at least twice as long as the distance of the atmosphere-side opening (31) of the winding path from the plane of the measurement membrane (11).

9. A relative pressure sensor according to one of the preceding claims, wherein the winding path has a cross-sectional surface area of less than 2 mm², preferably less than 1 mm², and particularly preferably from 0.7 to 0.4 mm².

10. A relative pressure sensor according to one of the preceding claims, wherein the distance of the plane of the winding path from the plane of the measurement membrane is less than the length of the winding path, preferably less than 75% of the length of the winding path, and particularly preferably less than 50% of the length of the winding path.

11. A relative pressure sensor according to one of the preceding claims, wherein the winding path is in thermal contact with the basic-body-side wall of the pressure chamber such that any desired cross-sections extending parallel to the separating membrane have between any desired point of the winding path and the basic-body-side wall of the pressure chamber a surface proportion of thermally conductive material which amounts to at least 10%, preferably at least 25%, and particularly preferably at least 50% of the membrane surface.

12. A relative pressure sensor according to one of the preceding claims, wherein the reference air path has on its atmosphere-side entry opening (31) a filter element (4) in order to prevent condensate from penetrating into the reference air path.

13. A relative pressure sensor according to Claim 12, wherein the filter element (4) is in thermal contact with the winding path (20).

14. A relative pressure sensor according to Claim 12, wherein the filter element (4) is water-repellent or rendered water-repellent.

15. A relative pressure sensor according to one of Claims 12 to 14, wherein the filter element (4) comprises a ceramic, metallic or organic material.

16. A relative pressure sensor according to one of the preceding claims, wherein the component (2) in which the winding path (4) [sic] is located is fastened to the basic body (10), forming a chamber.

17. A relative pressure sensor according to Claim 16, wherein the chamber is hermetically sealed off from the area surrounding it, and wherein furthermore at least one electronic structural element is located in the chamber.

18. A relative pressure sensor according to one of the preceding claims, wherein the winding path is of spiral or helical form.

## Revendications

1. Capteur de pression relative destiné à la mesure de la différence de pression entre une pression de mesure et la pression atmosphérique dans l'environnement du capteur de pression, comprenant
un corps de base (10) et une membrane de mesure (11) soumise à une pression de mesure, laquelle membrane est fixée par son bord sur le corps de base, une chambre de pression étant formée entre le corps de base et la membrane de mesure, laquelle chambre communique avec l'atmosphère à travers un conduit d'air de référence,
**caractérisé en ce que**
le conduit d'air de référence comprend un conduit sinueux (20), lequel est disposé dans un composant du capteur de pression relative, le composant étant le corps de base ou un autre composant fixé sur le corps de base, **caractérisé en ce que** la longueur du conduit sinueux (20) représente au moins 75 % de la longueur du périmètre de la membrane de mesure (11).

2. Capteur de pression relative selon la revendication 1, pour lequel le conduit sinueux comprend un canal en spirale, qui s'étend dans le composant entre deux ouvertures réalisées dans des tronçons de surface du composant.

3. Capteur de pression relative selon la revendication 1, pour lequel le conduit sinueux comprend une cavité (20) linéaire dans une surface du composant (2), cette cavité étant recouverte avec un autre composant (3).

4. Capteur de pression relative selon la revendication 1, pour lequel le conduit sinueux (20) évolue pour l'essentiel dans un plan.

5. Capteur de pression relative selon la revendication 4, pour lequel le plan est parallèle au plan de la membrane de mesure (11).

6. Capteur de pression relative selon l'une des revendications 1 à 5, pour lequel la longueur de la projection du conduit sinueux (20) sur le plan de la membrane de mesure (11) représente au moins 50 %, de préférence au moins 65 % et particulièrement de préférence au moins 80 % de la longueur totale du conduit sinueux (20).

7. Capteur de pression relative selon l'une des revendications 1 à 6, pour lequel la longueur du conduit sinueux (20) représente au moins 100 % et de préférence au moins 150 % de la longueur du périmètre de la membrane de mesure (11).

8. Capteur de pression relative selon l'une des revendications précédentes, pour lequel la longueur du conduit sinueux est égale à au moins le double de la distance de l'ouverture côté atmosphère (31) du conduit sinueux par rapport au plan de la membrane de mesure (11).

9. Capteur de pression relative selon l'une des revendications précédentes, pour lequel le conduit sinueux présente une surface de section de moins de 2 mm², de préférence de moins de 1 mm² et particulièrement de préférence entre 0,7 et 0,4 mm²_{.}

10. Capteur de pression relative selon l'une des revendications précédentes, pour lequel la distance du plan du conduit sinueux par rapport au plan de la membrane de mesure est inférieure à la longueur du conduit sinueux, de préférence inférieure à 75 % de la longueur du conduit sinueux et particulièrement de préférence inférieure à 50 % de la longueur du conduit sinueux.

11. Capteur de pression relative selon l'une des revendications précédentes, pour lequel le conduit sinueux est en contact thermique avec la paroi située côté corps de base de la chambre de pression, de telle manière que des sections quelconques se déroulant parallèlement à la membrane de séparation présentent, entre un point quelconque du conduit sinueux et la paroi située côté corps de base de la chambre de pression, une part de surface de matériau thermiquement conducteur, qui représente au moins 10 %, de préférence au moins 25 % et particulièrement de préférence au moins 50 % de la surface de membrane.

12. Capteur de pression relative selon l'une des revendications précédentes, pour lequel le conduit sinueux présente sur son orifice d'entrée (31) côté atmosphère un élément filtrant (4) destiné à empêcher l'infiltration d'eau de condensation dans le conduit sinueux.

13. Capteur de pression relative selon la revendication 12, pour lequel l'élément filtrant (4) est en contact thermique avec le conduit sinueux (20).

14. Capteur de pression relative selon la revendication 12, pour lequel l'élément filtrant (4) est hydrophobe ou imperméabilisé.

15. Capteur de pression relative selon l'une des revendications 12 à 14, pour lequel l'élément filtrant (4) est constitué d'un matériau céramique, métallique ou organique.

16. Capteur de pression relative selon l'une des revendications précédentes, pour lequel le composant (2), dans lequel le conduit sinueux (4) est disposé, est fixé sur le corps de base (10) en formant une chambre.

17. Capteur de pression relative selon la revendication 16, pour lequel la chambre est totalement hermétique par rapport à son environnement et, en outre, au moins un composant électronique est disposé dans la chambre.

18. Capteur de pression relative selon l'une des revendications précédentes, pour lequel le conduit sinueux évolue en forme spiralée ou hélicoïdale.
